# EUROPEAN PATENT SPECIFICATION

(11) **EP 2 698 041 B1**
(45) Date of publication and mention of the grant of the patent: **19.10.2016**
(21) Application number: 12718388.7
(22) Date of filing: 10.04.2012
(51) Int. Cl.: H05B 37/02

(54) **AMBIENCE RENDERING CONTROL SYSTEM**
STEUERSYSTEM FÜR RAUMBELEUCHTUNG
SYSTÈME DE COMMANDE DE RENDU D'AMBIANCE

(30) Priority: 14.04.2011 EP 11162374
(43) Date of publication of application: 19.02.2014
(73) Proprietor: Koninklijke Philips N.V., 5656 AE Eindhoven (NL)
(72) Inventor: VAN DE SLUIS, Bartel, Marinus, NL-5656 AE Eindhoven (NL); BERKVENS, Winfried, Antonius, Henricus, NL-5656 AE Eindhoven (NL); VAN LOENEN, Evert, Jan, NL-5656 AE Eindhoven (NL); FLINSENBERG, Ingrid, Christina, Maria, NL-5656 AE Eindhoven (NL); VAN SCHIJNDEL, Nicolle, Hanneke, NL-5656 AE Eindhoven (NL)
(74) Representative: Steffen, Thomas
(86) International application number: PCT/IB2012/051736
(87) International publication number: WO 2012/140563

(56) References cited:
- CN-A- 101 861 013
- US-A- 5 677 603
- US-A1- 2010 295 454

## Description

### FIELD OF THE INVENTION

The present invention relates to a system and method for controlling an ambience rendering system.

### BACKGROUND OF THE INVENTION

It has been recognized that a patient heals faster in certain environmental conditions. Future patient healing environments will enable the patient to be in an ambience which helps the patient to optimally recover, for example by sufficiently relaxing, or being distracted. Such ambience could include soft light or even soothing scents and/or sounds.

A potential issue of this approach is that such an ambience will not create the optimal working conditions for hospital staff; for example, if a patient prefers dimmed lighting to relax, the nurse needs bright light for work tasks. It is unpleasant for the patient if sudden changes in the area ambience occur. It would be preferable that the ambiance changes more gradually. If the care taker is to perform his or her task optimally and in a timely manner, a fast change in ambience is required. These two interests are in conflict. Therefore it would be advantageous to provide a system and method for predicting events and adapting the ambience accordingly so that the ambience is appropriate and optimal at all times.

An ambience rendering system may be placed in other domains. In general, it is expected that future users of lighting or ambience rendering systems will expect systems to learn specific patterns, predict upcoming events and to timely anticipate those predicted situations with appropriate system behavior. This could, for example, be relevant for people in offices who have been working late and would appreciate an illuminated path throughout a large office building or campus towards a parking, or when those people approach their homes, the lighting in the front of their houses could already start to glow when they are about to arrive.

CN 101861013 A discloses an intelligent lamp to work automatically according to people's habits.

The inventor of the present invention has appreciated that an improved ambience control system is of benefit, and has in consequence devised the present invention.

### SUMMARY OF THE INVENTION

It would be advantageous to enable an ambience rendering system to predict upcoming events, e.g. the arrival of a care taker. In general, the invention preferably seeks to mitigate, alleviate or eliminate one or more of the above mentioned disadvantages singly or in any combination. In particular, it may be seen as an object of the present invention to provide a method that solves the above mentioned problems, or other problems, of the prior art.

To better address one or more of these concerns, in a first aspect of the invention a method of operating an ambience control system is provided, the ambience control system comprises an ambience rendering system configured to adapt the ambience in an area so as to establish a current ambience state, a data storage comprising data relating to occurrence of events and ambience states, each of the events being associated with a specific ambience state, and a processor configured to determine estimated time to next event based on the data relating to occurrence of events, provided that the next event relates to an ambience state different from the current ambience state the ambience rendering system being configured to gradually adapt the ambience in the area to match the next ambient state, the method comprising the steps of determining current ambience state, determining estimated time to next event, and operating the area ambience system based on the estimated time to next event.

Advantageously an event occurrence detection unit may be provided. The event occurrence detection unit configured to detect the actual occurrence and time of occurrence, the method may then advantageously comprise detecting the occurrence of an event using the event occurrence detection unit, storing time and type of occurrence of event, and updating probabilities of a set of events based on the occurrence of an event. Recording events is contemplated to strengthen the prediction of new events. The recording of events may be used for determining patterns in event occurrence.

Advantageously a plurality of people position devices may be provided, the method may then comprise determining probability of a specific person triggering an event in the area based on the position of the person. The position of a person may be used for modifying the likelihood that the person is about to enter the area. Advantageously the data relating to occurrence of events are refined during use by using an expert system based on actual occurrences of events. The expert system may then help more quickly to obtain better predictions.

Further in a second aspect an ambience control system is provided. The system comprising a data storage comprising data relating to occurrence of a events and ambience states, the events being associated with a specific ambience state, an ambience rendering system configured to adapt the ambience in an area corresponding to the specific ambience state, and a processor configured to determine estimated time to next event based on the data relating to occurrence of event, provided that the next event relates to an ambience state being different from the current ambience state the area ambience system being configured to gradually adapt the ambience in the area to match the next ambient state. The system according to the second aspect is useful in a number of environments, including hospitals, housing areas, parking lots, parking houses. The systems provides an ambience control system that is capable of determining which event is most likely to occur next, how long time will there most likely be to that event, and the control system is then capable of controlling an ambience rendering system on the basis of those information.

As mentioned, the invention can also be applied to other domains than hospitals. In general, it is expected that future users of lighting or ambience creation systems will expect systems to learn specific patterns, predict upcoming events and to timely anticipate those predicted situations with appropriate system behavior. This can be relevant for people in offices who have been working late and would appreciate an illuminated path throughout a large office building or campus towards a parking. Or when those people approach their homes, the lighting in the front of their houses could already start to glow when they are about to arrive.

Advantageously as discussed above the ambience control system according to the present invention could further comprise an event occurrence detection unit configured to detect the actual occurrence and time of occurrence, the database storing time of occurrence of events, the processor could be configured to update data relating to the occurrence of events of a set of events based on the occurrence of an event. This could include refining or updating the probability of the occurrence of an event. If a doctor, or spouse, has just visited a patient, the likely hood that the doctor or spouse will return within the next hour is low, unless a new appointment already has been scheduled.

Advantageously the ambience system may comprise a lighting device and/or a video device and/or an audio device and/or a fragrance dispensing device and/or a climate control device. The number of devices present in an actual system may depend on the size of the area, and/or the desired effect of the system. Several devices may be combined to form the system, e.g. a number of light sources may be combined with one or more fragrance dispensing device.

Advantageously the data relating to occurrence of events may be based on input about detected events, patterns from previous event occurrence and expected event pattern based on an agenda or planning system. Further the data relating to occurrence of events may be probabilities of occurrence of events. The data relating to occurrence of events may be trained using an expert system,

Advantageously the ambience control system may further comprising a plurality of people position devices so as to determine probability of a specific person carrying a people position device triggering an event in the area. Knowing the position of one or more persons enhances reliability of the process of determination likelihood of that person entering the area and thereby triggering a new event. If it is detected that the person is moving towards the area and the schedule indicates that the person is to be in the room within a short period of time, this could form the basis for adapting the ambience in the area accordingly prior to the person entering the area.

Advantageously the people position device may be constituted by one or more of an electronic tag, a radar, a laser, an acoustic monitoring, a video monitoring system or a combination of these. Also the people position device may be constituted by a mobile device in wireless connection with one or more base stations, and the position may be determined by triangulation or similar technique.

Advantageously the plurality of people position devices are provided with information relating to a specific role, wherein the role is one of patient, doctor, nurse, cleaning personnel, visitor, hospital porter, physical therapist, other care taker personnel, catering personnel. This allows distinction between with type of tasks the person is to perform, without actually recording which person is performing the task. This ensures the anonymity of persons working in the hospital,

Advantageously the data relating to occurrence of events are refined using an expert system, or the like, based on actual occurrences of events. This ensures that the prediction of events is as good as possible. Further, patterns relating to occurrence of events may be used for determining the probability that an event occur.

Advantageously each event is provided with a priority level. This allows the system to determine if one of two equally likely events is a more important event. The events may be provided with a rank or weight.

Advantageously the ambience control system may further comprise a behavior detection device, the behavior detection device detecting current activities of persons in the area and, when the behavior detection device is configured to detect activities of a patient in a room, including sleeping patterns and/or determination of movement or non-movement. The system could also detect if a patient starts to watch TV in the room and adapt the ambience accordingly.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 is a schematic illustration of a system,
Fig. 2 is a schematic illustration of steps of a method,
Figs. 3 and 4 are schematic illustrations of states in decision trees,
Fig. 5 is a schematic illustration of a road,
Fig. 6 is a schematic illustration of two states, and
Fig. 7 is a schematic illustration of a system.

### DESCRIPTION OF EMBODIMENTS

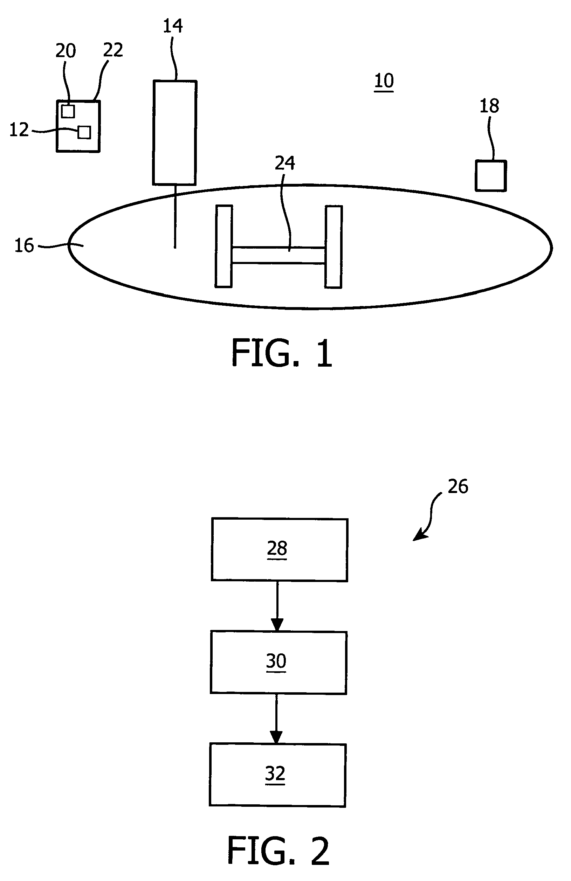

Fig. 1 schematically illustrates an ambience control system 10. The system comprising 10 a data storage 12 comprising data relating to occurrence of a events and ambience states, the events being associated with a specific ambience state, an ambience rendering system 14 configured to adapt the ambience in an area 16 corresponding to the specific ambience state, and a processor 20 configured to determine estimated time to next event based on the data relating to occurrence of event, provided that the next event relates to an ambience state being different from the current ambience state the ambience rendering system 14 being configured to gradually adapt the ambience in the area 16 to match the next ambient state.

The data storage 12 may be embodied by a data base or the like. The data may be stored on a hard drive, optical drive, cloud storage system or any other suitable storage unit. The ambience rendering system 14 may include several units, including light devices and scent releasing device. The data storage 12 and the processor 20 may be located in a box 22, as illustrated in Fig. 1.

A scent may be released selectively. The released scent may be composed of one or more perfumes. The scent may be released by using a fan or the like. A light device may be controlled in terms of the color and/or intensity. For instance the light device may emit whit bright light in some situations and soft, yellow light in other situations. In an embodiment the light device may include multiple light sources so that light may be combined to create the desired light intensity and/or color.

Fig. 2 schematically illustrates steps of a method 26 of operating an ambience control system is provided, the ambience control system comprises an ambience rendering system configured to adapt the ambience in an area so as to establish a current ambience state, a data storage comprising data relating to occurrence of events and ambience states, each of the events being associated with a specific ambience state, and a processor configured to determine estimated time to next event based on the data relating to occurrence of events, provided that the next event relates to an ambience state different from the current ambience state the ambience rendering system being configured to gradually adapt the ambience in the area to match the next ambient state, the method 26 comprising the steps of determining current ambience state 28, determining estimated time 30 to next event, and operating the area ambience system 32 based on the estimated time to next event.

A preferred embodiment of the present invention comprises an ambience creation or rendering system, which has sensing input, ambience controlling means, and a rendering infrastructure. The rendering infrastructure can include a variety of rendering elements, such as lighting devices, video and audio devices, and fragrance dispensing and climate control devices.

In an embodiment system according to the present invention includes a sensing infrastructure which is able to detect particular situations, such as specific people being present in a particular room. The sensor may simply detect a person entering the room, which could constitute a change in situation, however it is preferred that the system differentiates between the persons entering the room as each person may have a different function or role in the room. The sensor may e.g. detect presence of a doctor, nurse or the like being present or entering a room where a patient is present. Further the system may predict which function the person entering the room is going to perform, i.e. there may be a difference in the required ambience for a situation where a doctor is simply going to talk to the patient and a situation where the doctor is to examine the patient. Further, the system may advantageously comprise a manual override so that if it is first determined that the doctor is simply conducting an interview with the patient and decides during that talk to examine the patient the doctor is able to switch to a different, more appropriate, ambience setting.

The envisioned application domain is patient rooms in hospital environments, but the invention can also be applied in other areas.

A possible way to realize such a sensing infrastructure could be to make use of an electronic tag system, active or passive, and to require every person in a hospital, or at least in a particular hospital department or ward, to wear such a tag. Other potential sensing technology, not requiring tagging, would also be possible, such as radar, laser, acoustic monitoring, video monitoring or combinations of different sensing systems.

In addition to the sensing infrastructure, data on expected patterns can be relevant. For instance, the system 10 can have access to logged data on previous behaviors from which patterns may be derived; these patterns may then be used for predicting upcoming events. Furthermore, there may be planning data or agenda available which indicates which patients will be visited and in which order and at what time, and possibly by who. Such data is however only preliminary as delays and other factors may change the schedule. In addition to the above, the particular patient's agenda may be available, which indicates, for example, whether a therapist will visit or whether the patient needs to be prepared for examinations or is expecting visitors by loved-ones.

Based on the inputs from both the sensing infrastructure and the expected patterns, the system can extract patterns and calculate probabilities p(S) for how likely certain situations (S) will occur, for instance, in the next 60 minutes. The system will also make a prediction of Estimated Time (ET) that the Situation (S) will happen.

A set of situations needs to be defined to which the system can respond, the situations or states could include:
- doctor present in patient room
- catering person present in patient room
- cleaning person present in patient room
- nurse present in patient room
- visitor(s) present in patient room
- physical therapist present in patient room

In embodiments where the area to be augmented by the ambience rendering system is a path or other area, the situations or states could include
- car being present in drive way
- person or car approaching sensor
- person or car moving away from sensor

The ambience control system comprises a set of ambience settings which correspond to the set of defined situations. There may also be a weighed or ranked importance of situations and/or events; for instance, it can be determined that a doctor visit is more important than the presence of visitors, and as such the "visitors ambience" may be overruled by a "doctor visit ambience" when the doctor is visiting or about to visit the patient.

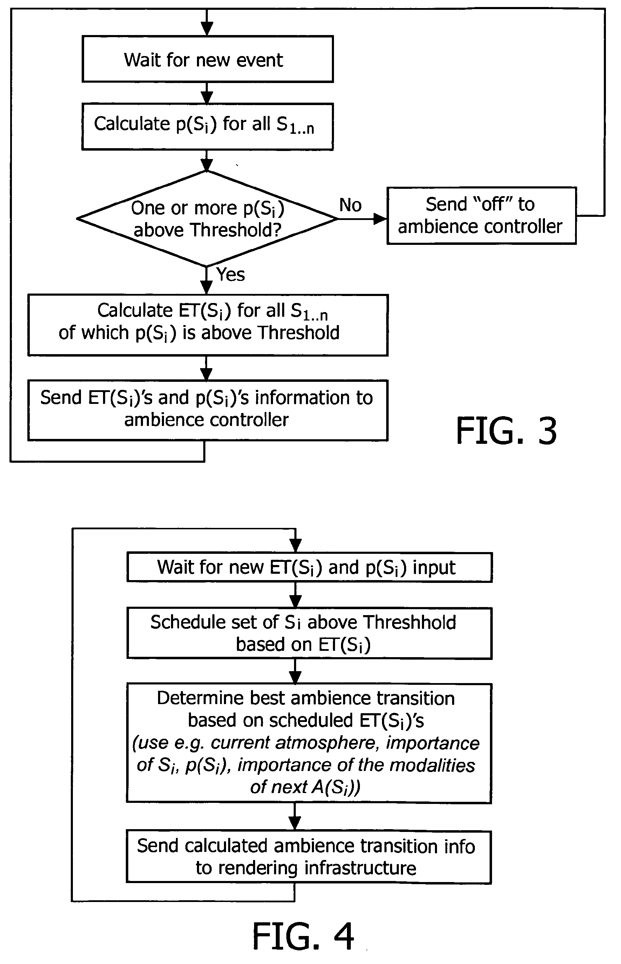

The extract predictions component basically determines which situations (S) are probably going to happen in the coming period. A flow diagram for this component is illustrated in Fig. 3. Based on each new detected event or an implicit event, as extracted from the past and planned patterns, the probabilities p(S) for all possible situations will be recalculated. In the next step a threshold is used so that only the situations with a high probability of occurrence will be considered. For each situation it is checked whether the currently calculated probability p(S) is above this threshold. Than the ET(S)'s are calculated for all situations with a certain likelihood of occurrence (so above threshold). If none of the probabilities is above the threshold, nobody (expect the patient(s)) is in the room and also nobody is expected to be in the room soon. So, the ambience in the room can be set to maintain the current status.

The ambience controller receives information about the expected time of occurrence ET(S) for the various situations (S). Based on the ET(S) the situations will be scheduled on a timeline. Based on this schedule and other available extra parameters the best suitable ambience transition is chosen.

Some examples of extra parameters that can be used to create the best suited ambience transition are:
- The current presented ambience in the environment
- The priority of the situations (S)
- Probability for the situations (S)
- Ambience parameters in the set of situations (S) that are the same
- Importance of the various modalities of the ambiences A(S)

Furthermore, knowledge about transition paths for the various modalities and combination of modalities that are pleasant for people could also be used to safeguard a non-disruptive transition.

As an additional feature, the ambience controller allows manual input from the patient or hospital staff to overrule the selected ambiences of the controller.

Advantageously an event occurrence detection unit may be provided. The event occurrence detection unit configured to detect the actual occurrence and time of occurrence, the method may then advantageously comprise detecting the occurrence of an event using the event occurrence detection unit, storing time and type of occurrence of event, and updating probabilities of a set of events based on the occurrence of an event. Recording events is contemplated to strengthen the prediction of new events. The recording of events may be used for determining patterns in event occurrence.

Advantageously a plurality of people position devices may be provided, the method may then comprise determining probability of a specific person triggering an event in the area based on the position of the person. The position of a person may be used for modifying the likelihood that the person is about to enter the area. Advantageously the data relating to occurrence of events are refined during use by using an expert system based on actual occurrences of events.

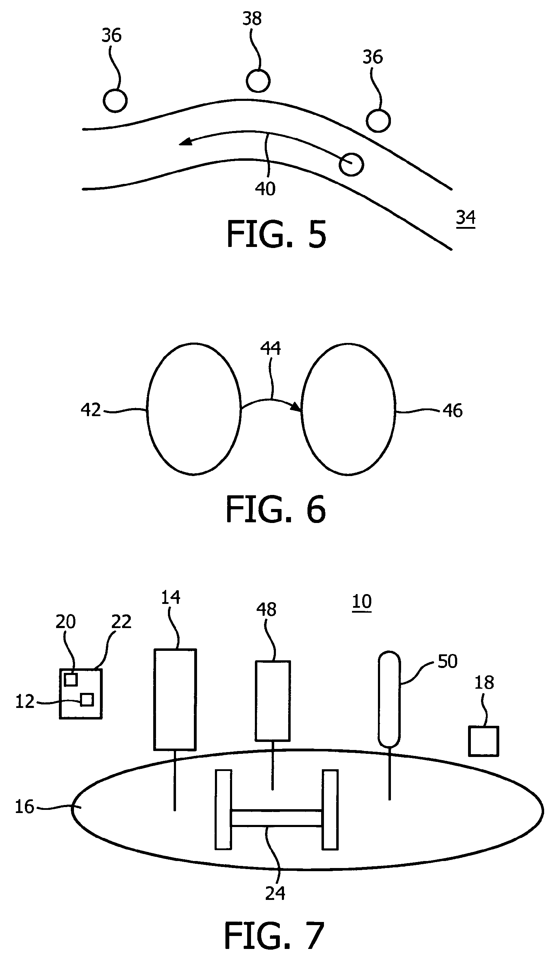

As mentioned, the invention can also be applied to other domains than hospitals. In general, it is expected that future users of lighting or ambience creation systems will expect systems to learn specific patterns, predict upcoming events and to timely anticipate those predicted situations with appropriate system behavior. This can be relevant for people in offices who have been working late and would appreciate an illuminated path throughout a large office building or campus towards a parking. Or when those people approach their homes, the lighting in the front of their houses could already start to glow when they are about to arrive. Fig. 5 schematically illustrates a road 34 where a number of light sources, denoted the reference numeral 36, light up the road. A sensor 38 detects the presence of a person or car 40 moving along the road 34.

Advantageously the area could generally be a room for a patient, a path to a parking lot or a footpath to a building, such as a residence or office building.

Fig. 6 schematically illustrates that the system is in a first state 42, indicated by the ellipse. An event occurs, indicated by the line 44. This event 44 triggers a change of state from the first state 43 to the second state 46. This could be embodied in a situation where in the first state 42 a patient is in a room alone sleeping. The event 44 could be a nurse entering the room with the intent to give the patient medication. To perform this task optimally the ambience in the room needs to be brighter that the optimal ambience for sleeping. Therefore the system adapts the ambience so that the system is now in the second state 46.

Fig. 7 schematically illustrates a system 10' having components similar to the components as the system in Fig. 1, like components are given like reference numerals and are not discussed again here. Compared to the system 10 illustrated in Fig. 1, the system 10' comprises an additional light source 48 and a fragrance dispensing or emitting unit 50.

Advantageously as discussed above the ambience control system according to the present invention could further comprise an event occurrence detection unit configured to detect the actual occurrence and time of occurrence, the database storing time of occurrence of events, the processor could be configured to update data relating to the occurrence of events of a set of events based on the occurrence of an event. This could include refining or updating the probability of the occurrence of an event. If a doctor, or spouse, has just visited a patient, the likely hood that the doctor or spouse will return within the next hour is low, unless a new appointment already has been scheduled.

Advantageously the ambience system may comprise a lighting device and/or a video device and/or an audio device and/or a fragrance dispensing device and/or a climate control device. The number of devices present in an actual system may depend on the size of the area, and/or the desired effect of the system. Several devices may be combined to form the system, e.g. a number of light sources may be combined with one or more fragrance dispensing device.

Advantageously the data relating to occurrence of events may be based on input about detected events, patterns from previous event occurrence and expected event pattern based on an agenda or planning system. Further the data relating to occurrence of events may be probabilities of occurrence of events. The data relating to occurrence of events may be trained using an expert system,

Advantageously the ambience control system may further comprising a plurality of people position devices so as to determine probability of a specific person carrying a people position device triggering an event in the area. Knowing the position of one or more persons enhances reliability of the process of determination likelihood of that person entering the area and thereby triggering a new event. If it is detected that the person is moving towards the area and the schedule indicates that the person is to be in the room within a short period of time, this could form the basis for adapting the ambience in the area accordingly prior to the person entering the area.

Advantageously the people position device may be constituted by one or more of an electronic tag, a radar, a laser, an acoustic monitoring, a video monitoring system or a combination of these. Also the people position device may be constituted by a mobile device in wireless connection with one or more base stations, and the position may be determined by triangulation or similar technique.

Advantageously the plurality of people position devices are provided with information relating to a specific role, wherein the role is one of patient, doctor, nurse, cleaning personnel, visitor, hospital porter, physical therapist, other care taker personnel, catering personnel. This allows distinction between with type of tasks the person is to perform, without actually recording which person is performing the task. This ensures the anonymity of persons working in the hospital,

Advantageously the data relating to occurrence of events are refined using an expert system, or the like, based on actual occurrences of events. This ensures that the prediction of events is as good as possible. Further, patterns relating to occurrence of events may be used for determining the probability that an event occur.

Advantageously each event is provided with a priority level. This allows the system to determine if one of two equally likely events is a more important event. The events may be provided with a rank or weight.

Advantageously the ambience control system may further comprise a behavior detection device, the behavior detection device detecting current activities of persons in the area and, when the behavior detection device is configured to detect activities of a patient in a room, including sleeping patterns and/or determination of movement or non-movement. The system could also detect if a patient starts to watch TV in the room and adapt the ambience accordingly.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE NUMERALS:

- 10: System
- 12: Data storage
- 14: Ambience rendering system
- 16: Area
- 18: Sensor
- 20: Processor
- 22: Box
- 24: Bed
- 26: Method
- 28: determining current ambience state
- 30: determining estimated time
- 32: operating the area ambience system
- 34: road
- 36: light source
- 38: sensor
- 40: person or car
- 42: First state
- 44: Event
- 46: Second state
- 48: Additional light source
- 50: Scent or fragrance source

## Claims

1. A method (26) of operating an ambience control system (10) comprising
- an ambience rendering system (14) configured to adapt the ambience in an area (16) so as to establish a current ambience state,
- a data storage (12) comprising data relating to occurrence of events and ambience states, each of the events being associated with a specific ambience state,
- a processor configured to determine an estimated time to a next event based on the data relating to occurrence of events, and provided that the next event relates to an ambience state different from the current ambience state the ambience rendering system (14) being configured to gradually adapt the ambience in the area (16) to match the next ambient state, the method comprising:
- determining (28) current ambience state,
- determining the estimated time (30) to the next event,
- operating (32) the area ambience system (10) based on the estimated time to the next event.

2. The method according to claim 1, wherein an event occurrence detection unit is provided, the event occurrence detection unit configured to detect the actual occurrence and time of occurrence,
the method (26) comprising:
- detecting the occurrence of an event using the event occurrence detection unit,
- storing time and type of occurrence of event, and
- updating probabilities of a set of events based on the occurrence of an event.

3. The method (26) according to any one of claim 1, wherein a plurality of people position devices is provided, the method comprising:
determining probability of a specific person triggering an event in the area (16) based on the position of the person.

4. The method (26) according to claim 1, wherein the data relating to occurrence of events are refined during use by using an expert system (10) based on actual occurrences of events.

5. An ambience control system (10) comprising:
- a data storage (12) comprising data relating to occurrence of events and ambience states, the events being associated with a specific ambience state,
- an ambience rendering system (14) configured to adapt the ambience in an area (16) corresponding to the specific ambience state, **characterised by** comprising,
- a processor configured to determine an estimated time to a next event based on the data relating to occurrence of events, and provided that the next event relates to an ambience state being different from the current ambience state the area ambience system (10) being configured to gradually adapt the ambience in the area (16) to match the next ambient state.

6. The ambience control system (10) according to claim 5, wherein the area (16) is a room for a patient, a path to a parking lot or a footpath to a building.

7. The ambience control system (10) according to claim 5, further comprising an event occurrence detection unit configured to detect the actual occurrence and time of occurrence, the database storing time of occurrence of events, the processor being configured to update probabilities of a set of events based on the occurrence of an event.

8. The ambience control system (10) according to claim 5, wherein the ambience system (10) comprises a lighting device (36, 48) and/or a video device and/or an audio device and/or a fragrance dispensing device (50) and/or a climate control device.

9. The ambience control system (10) according to claim 5, wherein the data relating to occurrence of a events are based on input about detected events, patterns from previous event occurrence and expected event pattern based on an agenda or planning system (10).

10. The ambience control system (10) according to claim 5, further comprising a plurality of people position devices so as to determine probability of a specific person carrying a people position device triggering an event in the area (16).

11. The ambience control system (10) according to claim 10, wherein the people position device is constituted by one or more of an electronic tag, a radar, a laser, an acoustic monitoring, a video monitoring system or a combination of these.

12. The ambience control system (10) according to claim 10, wherein the plurality of people position devices are provided with information relating to a specific role, wherein the role is one of patient, doctor, nurse, cleaning personnel, visitor, hospital porter, physical therapist, other care taker personnel, catering personnel.

13. The ambience control system (10) according to claim 5, wherein the data relating to occurrence of events are refined using an expert system based on actual occurrences of events.

14. The ambience control system (10) according to claim 5, wherein each event is provided with a priority level.

15. The ambience control system (10) according to claim 5, further comprising a behavior detection device, the behavior detection device detecting current activities of persons in the area (16) and, wherein behavior detection device is configured to detect activities of a patient in a room, including sleeping patterns and/or determination of movement or non-movement.

## Patentansprüche

1. Verfahren (26) zum Betreiben eines Umgebungssteuersystems (10) mit:
- einem Umgebungs-Rendering-System (14), das so konfiguriert ist, dass es die Umgebung in einem Bereich (16) so anpasst, dass ein aktueller Umgebungszustand hergestellt wird,
- einem Datenspeicher (12), der Daten umfasst, die auf das Stattfinden von Ereignissen sowie auf Umgebungszustände bezogen sind, wobei jedes der Ereignisse einem bestimmten Umgebungszustand zugeordnet ist,
- einem Prozessor, der so konfiguriert ist, dass er aufgrund der auf das Stattfinden von Ereignissen bezogenen Daten eine geschätzte Zeit zu einem nächsten Ereignis ermittelt, und, vorausgesetzt, dass sich das nächste Ereignis auf einen von dem aktuellen Umgebungszustand verschiedenen Umgebungszustand bezieht, das Umgebungs-Rendering-System (14) so konfiguriert ist, dass es die Umgebung in dem Bereich (16) stufenweise anpasst, um dem nächsten Umgebungszustand zu entsprechen,
wobei gemäß dem Verfahren:
- der aktuelle Umgebungszustand ermittelt wird (28),
- die geschätzte Zeit zu dem nächsten Ereignis ermittelt wird (30),
- aufgrund der geschätzten Zeit zu dem nächsten Ereignis das Bereichsumgebungssystem (10) betrieben wird (32).

2. Verfahren nach Anspruch 1, wobei eine Ereignisauftrittsdetektionseinheit vorgesehen wird, wobei die Ereignisauftrittsdetektionseinheit so konfiguriert ist, dass sie das effektive Auftreten und die effektive Zeit des Auftretens detektiert,
wobei gemäß dem Verfahren (26):
- das Auftreten des Ereignisses unter Verwendung der Ereignisauftrittsdetektionseinheit detektiert wird,
- Zeit und Art des Auftretens des Ereignisses gespeichert werden, und
- Wahrscheinlichkeiten einer Reihe von Ereignissen aufgrund des Auftretens eines Ereignisses aktualisiert werden.

3. Verfahren (26) nach Anspruch 1, wobei mehrere Personenpositionsgeräte vorgesehen werden, wobei gemäß dem Verfahren:
aufgrund der Position der Person die Wahrscheinlichkeit ermittelt wird, dass eine bestimmte Person ein Ereignis in dem Bereich (16) auslöst.

4. Verfahren (26) nach Anspruch 1, wobei die auf das Auftreten von Ereignissen bezogenen Daten während der Verwendung aufgrund aktueller Vorkommnisse von Ereignissen unter Benutzung eines Expertensystems (10) verfeinert werden.

5. Umgebungssteuersystem (10), umfassend:
- einem Datenspeicher (12), der Daten umfasst, die auf das Stattfinden von Ereignissen und auf Umgebungszustände bezogen sind, wobei die Ereignisse einem bestimmten Umgebungszustand zugeordnet ist,
- ein Umgebungs-Rendering-System (14), das so konfiguriert ist, dass es die Umgebung in einem Bereich (16) dem spezifischen Umgebungszustand entsprechend anpasst,
**dadurch gekennzeichnet, dass** es umfasst:
- einen Prozessor, der so konfiguriert ist, dass er aufgrund der auf das Stattfinden von Ereignissen bezogenen Daten eine geschätzte Zeit zu einem nächsten Ereignis ermittelt, und, vorausgesetzt, dass sich das nächste Ereignis auf einen von dem aktuellen Umgebungszustand abweichenden Umgebungszustand bezieht, das Bereichsumgebungssystem (10) so konfiguriert ist, dass es die Umgebung in dem Bereich (16) stufenweise anpasst, um dem nächsten Umgebungszustand zu entsprechen.

6. Umgebungssteuersystem (10) nach Anspruch 5, wobei es sich bei dem Bereich (16) um einen Raum für einen Patienten, einen Weg zu einem Parkplatz oder einen Fußweg zu einem Gebäude handelt.

7. Umgebungssteuersystem (10) nach Anspruch 5, das weiterhin eine Ereignisauftrittsdetektionseinheit umfasst, die so konfiguriert ist, dass sie das effektive Auftreten und die effektive Zeit des Auftretens detektiert, wobei die Datenbank den Zeitpunkt des Auftretens von Ereignissen speichert, wobei der Prozessor so konfiguriert ist, dass er Wahrscheinlichkeiten einer Reihe von Ereignissen aufgrund des Auftretens eines Ereignisses aktualisiert.

8. Umgebungssteuersystem (10) nach Anspruch 5, wobei das Umgebungssystem (10) eine Beleuchtungsvorrichtung (36, 48) und/oder eine Videovorrichtung und/oder eine Audiovorrichtung und/oder eine Duftspendevorrichtung (50) und/oder eine Klimasteuerungsvorrichtung umfasst.

9. Umgebungssteuersystem (10) nach Anspruch 5, wobei die auf das Auftreten eines Ereignisses bezogenen Daten auf einer Eingabe über detektierte Ereignisse, Muster von vorherigen Ereignisauftritten und erwarteten Ereignisauftritten aufgrund einer Agenda oder eines Planungssystems (10) basieren.

10. Umgebungssteuersystem (10) nach Anspruch 5, das weiterhin mehrere Personenpositionsgeräte umfasst, um die Wahrscheinlichkeit zu ermitteln, dass eine bestimmte, ein Personenpositionsgerät tragende Person ein Ereignis in dem Bereich (16) auslöst.

11. Umgebungssteuersystem (10) nach Anspruch 10, wobei das Personenpositionsgerät durch ein(einen) oder mehrere der folgenden gebildet wird: ein elektronisches Tag, einen Radar, einen Laser, eine akustische Überwachung, ein Videoüberwachungssys-tem oder eine Kombination derselben.

12. Umgebungssteuersystem (10) nach Anspruch 10, wobei die mehreren Personenpositionsgeräte mit auf eine bestimmte Rolle bezogenen Informationen versehen sind, wobei es sich bei der Rolle um eine der folgenden handelt: Patienten, Arzt, Krankenschwester, Reinigungspersonal, Besucher, Krankenhauspförtner, physikalischen Therapeuten, anderes Betreuerpersonal, Cateringpersonal.

13. Umgebungssteuersystem (10) nach Anspruch 5, wobei die auf das Auftreten von Ereignissen bezogenen Daten aufgrund von tatsächlichen Vorkommnissen von Ereignissen unter Verwendung eines Expertensystems verfeinert werden.

14. Umgebungssteuersystem (10) nach Anspruch 5, wobei jedes Ereignis mit einer Prioritätsstufe versehen ist.

15. Umgebungssteuersystem (10) nach Anspruch 5, das weiterhin eine Verhaltensdetektionsvorrichtung umfasst, wobei die Verhaltensdetektionsvorrichtung aktuelle Aktivitäten von Personen in dem Bereich (16) detektiert, und wobei die Verhaltensdetektionsvorrichtung so konfiguriert ist, dass sie Aktivitäten eines Patienten in einem Raum, einschließlich Schlafgewohnheiten und/oder Ermitteln von Bewegung oder Nicht-Bewegung, detektiert.

## Revendications

1. Procédé (26) de fonctionnement d'un système de commande d'ambiance (10), comprenant
- un système de rendu d'ambiance (14) configuré pour adapter l'ambiance dans une zone (16) afin d'établir un état d'ambiance actuel,
- un stockage de données (12) comprenant des données concernant une apparition d'événements et d'états d'ambiance, chacun des événements étant associé à un état d'ambiance spécifique,
- un processeur configuré pour déterminer un temps estimé jusqu'à un événement suivant en fonction des données d'aide concernant l'apparition d'événements, et à condition que l'événement suivant concerne un état d'ambiance différent de l'état d'ambiance actuel, le système de rendu d'ambiance (14) étant configuré pour adapter progressivement l'ambiance dans la zone (16) pour correspondre à l'état ambiant suivant, le procédé comprenant :
- la détermination (28) d'un état d'ambiance actuel,
- la détermination du temps estimé (30) jusqu'à l'événement suivant,
- le fonctionnement (32) du système d'ambiance de zone (10) en fonction du temps estimé jusqu'à l'événement suivant.

2. Procédé selon la revendication 1, dans lequel une unité de détection d'apparition d'événement est prévue, l'unité de détection d'apparition d'événement étant configurée pour détecter l'apparition réelle et le temps d'apparition, le procédé (26) comprenant :
- la détection de l'apparition d'un événement en utilisant l'unité de détection d'apparition d'événement,
- le stockage de temps et de type d'apparition d'événement, et
- l'actualisation de probabilités d'un jeu d'événements en fonction de l'apparition d'un événement.

3. Procédé (26) selon la revendication 1, dans lequel une pluralité de dispositifs de position de personne est prévue, le procédé comprenant :
- la détermination de probabilité d'une personne spécifique déclenchant un événement dans la zone (16) en fonction de la position de la personne.

4. Procédé (26) selon la revendication 1, dans lequel les données concernant une apparition d'événements sont affinées durant l'utilisation en utilisant un système expert (10) en fonction d'apparitions réelles d'événements.

5. Système de commande d'ambiance (10), comprenant :
- un stockage de données (12) comprenant des données concernant une apparition d'événements et d'états d'ambiance, les événements étant associés à un état d'ambiance spécifique,
- un système de rendu d'ambiance (14) configuré pour adapter l'ambiance dans une zone (16) correspondant à l'état d'ambiance spécifique, **caractérisé en ce qu'**il comprend :
- un processeur configuré pour déterminer un temps estimé jusqu'à un événement suivant en fonction des données concernant l'apparition d'événements, et à condition que l'événement suivant concerne un état d'ambiance différent de l'état d'ambiance actuel, le système d'ambiance de zone (10) étant configuré pour adapter progressivement l'ambiance dans la zone (16) pour correspondre à l'état ambiant suivant.

6. Système de commande d'ambiance (10) selon la revendication 5, dans lequel la zone (16) est une salle pour un patient, un chemin jusqu'à un parc de stationnement ou un trottoir jusqu'à un bâtiment.

7. Système de commande d'ambiance (10) selon la revendication 5, comprenant en outre une unité de détection d'apparition d'événement configuré pour détecter l'apparition réelle et le temps d'apparition, la base de données stockant le temps d'apparition d'événements, le processeur étant configuré pour actualiser des probabilités d'un jeu d'événements en fonction de l'apparition d'un événement.

8. Système de commande d'ambiance (10) selon la revendication 5, dans lequel le système d'ambiance (10) comprend un dispositif d'éclairage (36, 48) et/ou un dispositif vidéo et/ou un dispositif audio et/ou un dispositif de distribution de parfum (50) et/ou un dispositif de commande de climat.

9. Système de commande d'ambiance (10) selon la revendication 5, dans lequel les données concernant une apparition d'événements sont fondées sur une entrée concernant des événements détectés, des modes à partir d'apparition d'événement précédente et un mode d'événement attendu en fonction d'un agenda ou système de planification (10).

10. Système de commande d'ambiance (10) selon la revendication 5, comprenant en outre une pluralité de dispositifs de position de personne afin de déterminer une probabilité d'une personne spécifique portant un dispositif de position de personne déclenchant un événement dans la zone (16).

11. Système de commande d'ambiance (10) selon la revendication 10, dans lequel le dispositif de position de personne est constitué par un ou plusieurs parmi une étiquette électronique, un radar, un laser, une surveillance acoustique, un système de surveillance vidéo ou une association de ceux-ci.

12. Système de commande d'ambiance (10) selon la revendication 10, dans lequel la pluralité de dispositifs de position de personne sont pourvus d'information concernant un rôle spécifique, dans lequel le rôle est l'un parmi un patient, un docteur, une infirmière, un personnel de nettoyage, un visiteur, un portier d'hôpital, un thérapeute physique, un autre personnel de soins, un personnel de restauration.

13. Système de commande d'ambiance (10) selon la revendication 5, dans lequel les données concernant une apparition d'événements sont affinées en utilisant un système expert en fonction d'apparitions réelles d'événements.

14. Système de commande d'ambiance (10) selon la revendication 5, dans lequel chaque événement est pourvu d'un niveau de priorité.

15. Système de commande d'ambiance (10) selon la revendication 5, comprenant en outre un dispositif de détection de comportement, le dispositif de détection de comportement détectant des activités actuelles de personnes dans la zone (16) et dans lequel le dispositif de détection de comportement est configuré pour détecter des activités d'un patient dans une salle, y compris des rythmes de sommeil et/ou une détermination de mouvement ou de non-mouvement.
